(19) Europäisches Patentamt
European Patent Office
Office européen des brevets

(11) EP 2 863 452 B1

(12) **EUROPEAN PATENT SPECIFICATION**

(45) Date of publication and mention of the grant of the patent:
**04.12.2019 Bulletin 2019/49**

(51) Int Cl.:
***H01M 2/14*** *(2006.01)* ***H01M 2/16*** *(2006.01)*

(21) Application number: **14162766.1**

(22) Date of filing: **31.03.2014**

(54) **BATTERY SEPARATION LAYER COMPRISING A QUATERNARY AMMONIUM FLUORINATED SALT COATING MATERIAL**

BATERIENTRENNUNGSCHICHT ENTHALTEND FLUORIERTES QUATERNÄR-AMMONIUM-SALZ.

COUCHE DE SEPARATION D'UNE BATTERIE CONTENANT UN SEL FLUORÉ D'AMMONIUM QUATERNAIRE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2013 KR 20130124920**

(43) Date of publication of application:
**22.04.2015 Bulletin 2015/17**

(73) Proprietor: **Samsung SDI Co., Ltd.**
**Yongin-si, Gyeonggi-do (KR)**

(72) Inventors:
- **Choi, Yeon-Joo**
  **Yongin-si, Gyeonggi-do (KR)**
- **Park, Jong-Hwan**
  **Yongin-si, Gyeonggi-do (KR)**
- **Nam, Jung-Hyun**
  **Yongin-si, Gyeonggi-do (KR)**
- **Seok, Hoon**
  **Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**US-A- 6 053 953**
**US-A1- 2010 104 941**
**US-A1- 2010 304 205**
**US-A1- 2013 236 764**
**US-A1- 2013 260 207**
**US-B2- 8 279 580**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 863 452 B1

## Description

The present invention relates to a coated separator and an electrochemical device including the same, and more particularly to a coated separator for a lithium battery and a lithium battery including the coated separator.

## DESCRIPTION OF THE RELATED ART

A battery generally includes a positive electrode, a negative electrode, and a separator. The separator is used to prevent a contact, i.e., internal short circuit, between the positive electrode and the negative electrode, and is used as a path for moving electrolyte ions.

Recently, various types of materials are being used as materials for a separator, but a separator manufactured by using polyethylene is most commonly used. A conventional separator for a lithium battery generally includes a porous sheet or film formed of polyolefin-based material alone or of polyolefin-based material and ultrahigh molecular weight polyethylene.

A binder material is sometimes coated on the separator to increase binding strength between the separator and an electrode. However, a separator coated with the binder material may increase internal resistance of a lithium battery, which deteriorates output characteristics of the lithium battery and sharply decreases capacity of the lithium battery as a charge and discharge cycle progresses, thereby decreasing a lifespan of the lithium battery. Also, a coated separator may generate static electricity depending on the type of the binder used. For example, although a separator coated with polyvinylidene fluoride has excellent binding strength to electrode plates and high acid resistance, the separator generates static electricity, thereby generating processing defects such as a negative electrode insertion defect and a negative electrode tab location defect during a rolling process of an electrode assembly that has a structure of positive electrode/separator/negative electrode.

Accordingly, there is a dire need for various researches to manufacture a separator that plays an important role in performance and stability of a lithium battery.

US 2013/020207 A1 discloses a separator, which surface is coated by hot melting and solidifying a surface protective agent composition thereon. Said composition includes at least two types of organic particles, which do form separate phases when solidified. According to one embodiment, the organic particles may be formed of polymers, e.g. polyvinylidene fluoride. According to another embodiment, the composition may include an ionic liquid, for example tetrabutylammonium heptadecaflurooctanesulfonate.

## SUMMARY OF INVENTION

The invention refers to a coated separator as defined in claim 1. The coated separator reduces generation of static electricity and may inhibit decrease in capacity retention rate that occurs as a charge and discharge cycle progresses.

According to another aspect of the present invention there is provided an electrochemical device including the coated separator.

Additional aspects of the invention could be learned from the dependent claims or will be set forth in the description which follows.

## BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view of a lithium battery according to an embodiment;

FIG. 2 shows a result of oxidation stability according to the use of each additive by using linear sweep voltammetry (LSV) ; and

FIG. 3 shows measurement results of capacity retention rates of the lithium batteries prepared in Example 1 and Comparative Examples 1-3.

## DETAILED DESCRIPTION

A coated separator according to the invention includes
a separator substrate; and

a separator coating layer that is disposed on at least one surface of the separator substrate, and consists of polyvinylidene fluoride, at least one quaternary ammonium salt, and, optionally, a binder resin.

In the coated separator, the separator substrate may be any separator substrate typically used in an electrochemical device. More specifically, a separator substrate that has a low resistance to migration of ions of an electrolyte and an excellent electrolytic solution-retaining capability is appropriate. Preferably, the separator substrate may be a porous substrate formed of at least one polymer selected from the group consisting of polyethylene, polypropylene, polybutylene, polypentene, polytetrafluoroethylene (PTFE), polyester, polyacetal, polyamide, polycarbonate, polyimide, polyetheretherketone, polyethersulfone, polyphenylene oxide, polyphenylene sulfide, polyethylene naphthalene, and glass fiber.

The separator substrate may be a porous film, a non-woven fabric, or a woven fabric. A thickness of the separator substrate may be 1 $\mu$m to 300 $\mu$m, especially 3 $\mu$m to 100 $\mu$m, or most preferred 5 $\mu$m to 20 $\mu$m. A pore diameter and porosity of pores in the separator substrate are not particularly limited, for example, a pore diameter may be 0.01 $\mu$m to 50 $\mu$m, and a porosity may be 10% to 95 %.

The separator substrate may be a single layer porous substrate formed of polyethylene.

The separator substrate may be a multi-layer film of olefin-based polymers, for example, the separator substrate may be a multi-layer film of two or more of polyethylene, polypropylene, and polyvinylidene fluoride, or a mixed multi-layer film, such as a double-layer separator of polyethylene/polypropylene, a triple-layer separator of polyethylene/polypropylene/polyethylene, or a triple-layer separator of polypropylene/polyethylene/polypropylene.

The separator coating layer is disposed on at least one surface of the separator substrate. The separator coating layer includes polyvinylidene fluoride and one or more quaternary ammonium salt.

The polyvinylidene fluoride included in the separator coating layer increases binding strength between the coated separator and an electrode. Also, polyvinylidene fluoride has a high ion conductivity due to its affinity to a liquid electrolyte, compared to a polymer material used in the separator substrate.

The separator coating layer includes 50 wt% or more of polyvinylidene fluoride based on a total amount of the polymer material in the separator coating layer. For example, the separator coating layer may include 60 wt%, 70 wt%, 80 wt%, or 90 wt% of polyvinylidene fluoride, or may include 100 wt% of polyvinylidene fluoride.

The separator coating layer may further include a binder resin typically used in the art in addition to polyvinylidene fluoride as long as the binder resin does not hinder properties of polyvinylidene fluoride. In detail, the separator coating layer may further include at least one binder resin selected from polyvinylidene chloride, polybenzimidazole, polyimide, polyvinyl acetate, polyacrylonitrile, polyvinyl alcohol, carboxymethylcellulose (CMC), starch, hydroxypropyl cellulose, regenerated cellulose, polyvinylpyrrolidone, tetrafluoroethylene, polyethylene, polypropylene, polystyrene, polymethylmethacrylate, polyaniline, acrylonitrile butadiene styrene, phenol resin, epoxy resin, polyethylene terephthalate, polytetrafluoroethylene, polyphenylene sulfide, polyamideimide, polyetherimide, polyethylenesulfone, polyamide, polyacetal, polyphenylene oxide, polybutylene terephthalate, ethylene-propylene-diene terpolymer (EPDM), sulfonated EPDM, styrene butadiene rubber, fluoride rubber, and a copolymer thereof.

The binder resin may be included in an amount of 50 wt% or less based on total weight of polymer materials in the separator coating layer, so as not to inhibit the properties of polyvinylidene fluoride.

The at least one quaternary ammonium salt in the separator coating layer acts as an ion conductive and electroconductive material to provide an anti-static function to the separator coating layer. Accordingly, the quaternary ammonium salt may disperse static electricity in the coated separator including polyvinylidene fluoride to inhibit the generation of static electricity.

The at least one quaternary ammonium salt is represented by Formula 1 below.

[Formula 1]

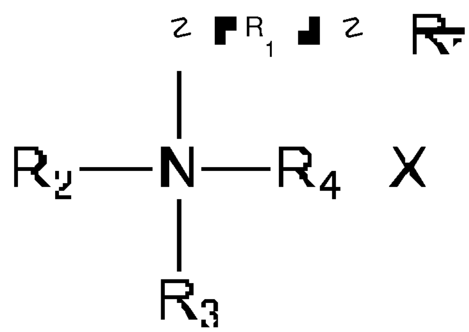

In Formula 1 above, $R_1$, $R_2$, $R_3$, and $R_4$ are each independently a $C_1$-$C_5$ alkyl group and X is a fluorine-containing

negative ion.

Preferred examples of a positive ion of the at least one quaternary ammonium salt include tetramethylammonium, tetraethylammonium, tetrapropylammonium, tetrabutylammonium, tetrapentylammonium, trimethylethylammonium, trimethylpropylammonium, trimethylbutylammonium, trimethylpentylammonium, triethylmethylammonium, triethylpropylammonium, triethylbutylammonium, triethylpentylammonium, tripropylmethylammonium, tripropylethylammonium, tripropylbutylammonium, tripropylpentylammonium, tributylmethylammonium, tributylethylammonium, tributylpropylammonium, tributylpentylammonium, dimethyldiethylammonium, dimethyldipropylammonium, dimethyldibutylammonium, dimethyldipentylammonium, diethyldipropylammonium, diethyldibutylammonium, diethyldipentylammonium, dipropyldibutylammonium, dipropyldipentylammonium, dibutyldipentylammonium, dimethylethylpropylammonium, dimethylethylbutylammonium, dimethylethylpentylammonium, dimethylpropylbutylammonium, dimethylpropylpentylammonium, dimethylbutylpentylammonium, diethylmethylpropylammonium, diethylmethylbutylammonium, diethylmethylpentylammonium, diethylpropylbutylammonium, diethylpropylpentylammonium, diethylbutylpentylammonium, dipropylmethylethylammonium, dipropylmethylbutylammonium, dipropylmethylpentylammonium, dipropylethylbutylammonium, dipropylethylpentylammonium, dipropylbutylpentylammonium, dibutylmethylethylammonium, dibutylmethylpropylammonium, dibutylmethylpentylammonium, dibutylethylpropylammonium, dibutylethylpentylammonium, dipentylmethylethylammonium, dipentylmethylpropylammonium, dipentylmethylbutylammonium, dipentylethylpropylammonium, dipentylethylbutylammonium, dipentylpropylbutylammonium, and methylethylpropylbutylammonium.

In greater detail, examples of the positive ion of the at least one quaternary ammonium salt include especially tetramethylammonium, tetraethylammonium, tetrapropylammonium, tetrabutylammonium, and tetrapentylammonium.

The fluorine-containing negative ion of the at least one quaternary ammonium salt includes at least one of $PF_6^-$, $BF_4^-$, $AsF_6^-$, $SbF_6^-$, $N(SO_2CF_3)_2^-$, $N(SO_2F)_2^-$, $N(SO_2CF_3)(COCF_3)^-$, $N(SO_2CF_3)(SO_2C_2F_5)^-$, $SO_3CF_3^-$, $SO_3C_2F_5^-$, $SO_3C_3F_7^-$, and $SO_3C_4F_9^-$.

An amount of the quaternary ammonium salt is 0.5 wt% to 50 wt% based on a total weight of the polyvinylidene fluoride and the quaternary ammonium salt. For example, the amount of the quaternary ammonium salt may be 0.5 wt% to 40 wt%, 1 wt% to 30 wt%, or 3 wt% to 10 wt% based on the total weight of the polyvinylidene fluoride and the quaternary ammonium salt. By using the polyvinylidene fluoride in an amount in the range above, static electricity generated from the use of the polyvinylidene fluoride may be effectively dispersed.

As a result, the coated separator includes a separator coating layer including polyvinylidene fluoride and at least one quaternary ammonium salt to disperse static electricity in the coated separator, thereby to reduce a quantity of electrostatic charge to about 0.6 kV or less. For example, the coated separator may reduce the quantity of electrostatic charge to 0.5 kV or less, 0.3 kV or less, 0.1 kV or less, 0.05 kV or less, 0.02 kV or less, or 0.01 kV or less.

A thickness of the separator coating layer may be 1 $\mu$m to 100 $\mu$m. For example, the thickness of the separator coating layer may be 1 $\mu$m to 50 $\mu$m, and in greater detail, may be 3 $\mu$m to 10 $\mu$m. Although the thickness of the separator coating layer is not limited to the range above, the separator coating layer may effectively prevent the generation of static electricity and bind the separator coating layer to an electrode to an appropriate level when the thickness is in the range described above.

A method of coating the separator coating layer on a surface of the separator substrate is not particularly limited. For example, flow coating, spin coating, dip coating, or bar coating may be used to form the separator coating layer. For example, when dip coating is used, the separator substrate is immersed into a mixture solution in which the polyvinylidene fluoride and at least one quaternary ammonium salt are dispersed, to form the separator coating layer.

As a solvent that may be used to prepare a mixture solution for forming the separator coating layer, any solvent that may uniformly disperse the quaternary ammonium salt and stably dissolve or disperse the polyvinylidene fluoride may be used. For example, N-methylpyrrolidone (NMP), dimethylformamide, dimethylacetamide, N-dimethyl formaldehyde, acetone, or water may be used. Other additives may be added to stabilize the mixture solution for forming the separator coating layer. An amount of the solvent is not particularly limited, and the amount may be in a range for adjusting a concentration of the mixture solution for forming the separator to make it suitable for a coating process.

The coated separator manufactured as above may disperse static electricity of the coated separator including polyvinylidene fluoride to resolve the problem of static electricity generation, and the coated separator may increase binding strength between the coated separator and an electrode, and prevent decrease in capacity retention rate that occurs as a charge and discharge cycle progresses.

An electrochemical device according to another aspect includes a positive electrode; a negative electrode; and the coated separator disposed between the positive electrode and the negative electrode.

The electrochemical device may be manufactured according to a method known in the art. For example, the positive electrode and the negative electrode may be assembled as disposed opposite to each other with the coated separator disposed therebetween, and an electrolyte may be injected between the positive electrode and the negative electrode to manufacture the electrochemical device.

The electrochemical device including the coated separator includes all types of devices that undergo an electrochemical reaction, such as all types of primary batteries, secondary batteries, fuel cells, solar cells, or capacitors such

as a super capacitor. More particularly, the electrochemical device may be applied to the secondary batteries such as a lithium metal secondary battery, a lithium ion secondary battery, a lithium polymer secondary battery, or a lithium ion polymer secondary battery.

According to an embodiment, the electrochemical device may be a lithium battery, and FIG. 1 is a schematic view of a structure of a lithium battery according to an embodiment.

Referring to FIG. 1, the lithium battery 30 includes a positive electrode 23, a negative electrode 22, and a coated separator 24 disposed between the positive and negative electrodes 23 and 22. The positive electrode 23, the negative electrode 22, and the coated separator 24 are wound or folded to be housed in a battery case 25. Then, an electrolyte is injected into the battery case 25, followed by sealing the battery case 25 with an encapsulation member 26, thereby completing the manufacture of the lithium battery 30. The battery case 25 may be of a cylindrical, rectangular, or thin film type. The lithium battery 30 may be a lithium ion battery.

The positive electrode 23 includes a positive electrode current collector, and a positive active material layer formed on the positive electrode current collector.

The positive electrode current collector generally has a thickness of 3 $\mu$m to 500 $\mu$m. Any positive electrode current collector may be used, as long as the positive electrode current collector has conductivity and does not induce chemical changes to the battery. Examples of the positive electrode current collector include copper, stainless steel, aluminum, nickel, titanium, calcined carbon, copper or stainless steel surface-treated with carbon, nickel, titanium, silver, or the like, and aluminum-cadmium alloy. Also, binding strength of the positive active material may be increased by forming minute irregularities on a surface of the positive electrode current collector. The positive electrode current collector may be used in various forms such as a film, a sheet, a foil, a net, a porous body, a foaming body, and a non-woven fabric.

The positive active material layer includes the positive active material, a binder, and optionally a conductive agent.

As the positive active material, any lithium-containing metal oxide generally used in the art may be used. For example, at least one mixed oxide of lithium and a metal selected from of cobalt, manganese, nickel, and a combination thereof may be used and more particularly, a compound represented by any one of Formulae $Li_aA_{1-b}B_bD_2$ (wherein, $0.90 \leq a \leq 1$ and $0 \leq b \leq 0.5$); $Li_aE_{1-b}B_bO_{2-c}D_c$ (wherein, $0.90 \leq a \leq 1$, $0 \leq b \leq 0.5$, and $0 \leq c \leq 0.05$); $LiE_{2-b}B_bO_{4-c}D_c$ (wherein, $0 \leq b \leq 0.5$, $0 \leq c \leq 0.05$); $Li_aNi_{1-b-c}Co_bB_cD_\alpha$ (wherein, $0.90 \leq a \leq 1$, $0 \leq b \leq 0.5$ and $0 \leq c \leq 0.05$, $0 < \alpha \leq 2$); $Li_aNi_{1-b-c}Co_bB_cO_{2-\alpha}F_\alpha$ (wherein, $0.90 \leq a \leq 1$, $0 \leq b \leq 0.5$ and $0 \leq c \leq 0.05$, $0 < \alpha < 2$); $Li_aNi_{1-b-c}Co_bB_cO_{2-\alpha}F_2$ (wherein, $0.90 \leq a \leq 1$, $0 \leq b \leq 0.5$ and $0 \leq c \leq 0.05$, $0 < \alpha < 2$); $Li_aNi_{1-b-c}Mn_bB_cD_\alpha$ (wherein, $0.90 \leq a \leq 1$, $0 \leq b \leq 0.5$ and $0 \leq c \leq 0.05$, $0 < \alpha \leq 2$); $Li_aNi_{1-b-c}Mn_bB_cO_{2-\alpha}F_\alpha$ (wherein, $0.90 \leq a \leq 1$, $0 \leq b \leq 0.5$ and $0 \leq c \leq 0.05$, $0 < \alpha < 2$); $Li_aNi_{1-b-c}Mn_bB_cO_{2-\alpha}F_2$ (wherein, $0.90 \leq a \leq 1$, $0 \leq b \leq 0.5$, $0 \leq c \leq 0.05$, and $0 < \alpha < 2$); $Li_aNi_bE_cG_dO_2$ (wherein, $0.90 \leq a \leq 1$, $0 \leq b \leq 0.9$, $0 \leq c \leq 0.5$, and $0.001 \leq d \leq 0.1$.); $Li_aNi_bCo_cMn_dGeO_2$ (wherein, $0.90 \leq a \leq 1$, $0 \leq b \leq 0.9$, $0 \leq c \leq 0.5$, and $0 \leq d \leq 0.5$, $0.001 \leq e \leq 0.1$.); $Li_aNiG_bO_2$ (wherein, $0.90 \leq a \leq 1$ and $0.001 \leq b \leq 0.1$.); $Li_aCoG_bO_2$ (wherein, $0.90 \leq a \leq 1$ and $0.001 \leq b \leq 0.1$.); $Li_aMnG_bO_2$ (wherein, $0.90 \leq a \leq 1$ and $0.001 \leq b \leq 0.1$.); $Li_aMn_2G_bO_4$ (wherein, $0.90 \leq a \leq 1$ and $0.001 \leq b \leq 0.1$.); $QO_2$; $QS_2$; $LiQS_2$; $V_2O_5$; $LiV_2O_5$; $LiIO_2$; $LiNiVO_4$; $Li_{(3-f)}J_2(PO_4)_3 (0 \leq f \leq 2)$; $Li_{(3-f)}Fe_2(PO_4)_3 (0 \leq f \leq 2)$; and $LiFePO_4$.

In the Formulae above, A is nickel (Ni), cobalt (Co), manganese (Mn), or a combination thereof; B is aluminum (Al), Ni, Co, Mn, chromium (Cr), iron (Fe), magnesium (Mg), strontium (Sr), vanadium (V), a rare earth metal element, or a combination thereof; D is oxygen (O), fluorine (F), sulfur (S), phosphorus (P), or a combination thereof; E is Co, Mn, or a combination thereof; F is F, S, P, or a combination thereof; G is Al, Cr, Mn, Fe, Mg, lanthanum (La), cerium (Ce), Sr, V, or a combination thereof; Q is titanium (Ti), molybdenum (Mo), Mn, or a combination thereof; I is Cr, V, Fe, scandium (Sc), yttrium (Y), or a combination thereof; and J is V, Cr, Mn, Co, Ni, copper (Cu), or a combination thereof.

For example, the positive electrode material may be $LiCoO_2$, $LiMn_xO_{2x}$(x=1, 2), $LiNi_{1-x}Mn_xO_{2x}$(0<x<1), $LiNi_{1-x-y}Co_xMn_yO_2$ ($0 \leq x \leq 0.5$, $0 \leq y \leq 0.5$), $FePO_4$, or the like.

The compound may have a coating layer thereon, or the compound and the compound having a coating layer thereon may be mixed together. The coating layer may include a coating element compound of an oxide of a coating element, a hydroxide of the coating element, an oxyhydroxide of the coating element, an oxycarbonate of the coating element, or a hydroxycarbonate of the coating element. The compound forming the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a combination thereof. A method of forming the coating layer may be any method (for example, spray coating or immersion) that does not negatively affect properties of the positive electrode by using the element in the compound, and the method is well known to one of ordinary skill in the art and thus, the description thereof will be omitted herein.

The binder thoroughly binds positive active material particles together and thoroughly binds the positive active material to the positive electrode current collector. Examples of the binder include, but are not limited to, polyvinyl alcohol, carboxymethyl cellulose, hydroxyl propyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber,

an epoxy resin, and nylon.

The binder is used to provide conductivity to an electrode, and the binder may be any conductive material that does not induce chemical changes to the battery. Examples of the binder include natural graphite, synthetic graphite, carbon black, acetylene black, Ketjen black, carbon fiber; metal powder of copper, nickel, aluminum, or silver; and metal fiber. Also, the binder may be a conductive material such as a polyphenylene derivative or the like, that is used alone or as a mixture of two or more thereof.

The negative electrode 22 includes a negative electrode current collector and a negative active material layer formed on the negative electrode current collector.

The negative electrode current collector generally has a thickness of 3 $\mu$m to 500 $\mu$m. Any negative electrode current collector may be used, as long as the negative electrode current collector has conductivity and does not induce chemical changes to the battery. Examples of the negative electrode current collector include copper, stainless steel, aluminum, nickel, titanium, calcined carbon, copper or stainless steel surface-treated with carbon, nickel, titanium, silver, or the like, and aluminum-cadmium alloy. Also, binding strength of the negative active material may be increased by forming minute irregularities on a surface of the negative electrode current collector. The negative electrode current collector may be used in various forms such as a film, a sheet, a foil, a net, a porous body, a foaming body, and a non-woven fabric.

The negative active material layer includes the negative active material, a binder, and optionally a conductive agent.

The negative active material may additionally include another conventional negative active material, in addition to the silicon-based negative active material.

The conventional negative active material may be any negative active material generally used in the art. For example, a lithium metal, a metal alloyable with lithium, a transition metal oxide, a metal that may dope and undope lithium, and a material capable of reversible intercalation and deintercalation of lithium ions may be used, and the general negative active material may be used as a mixture or a bound form of two or more thereof.

As an alloy of the lithium metal, an alloy of lithium and a metal selected from the group consisting of Na, K, rubidium (Rb), cesium (Cs), francium (Fr), beryllium (Be), Mg, Ca, Sr, Si, stibium (Sb), lead (Pb), indium (In), zinc (Zn), barium (Ba), radon (Ra), Ge, Al, and Sn may be used.

Non-limiting examples of the transition metal oxide include a tungsten oxide, a molybdenum oxide, a titanium oxide, a lithium titanium oxide, a vanadium oxide, and a lithium vanadium oxide.

The material that may dope and undope lithium may be, for example, Sn, $SnO_2$, a Sn-Y alloy (wherein, Y is an alkali metal, an alkaline earth metal, a Group 13 element, a Group 14 element, a Group 15 element, a Group 16 element, a transition metal, a rare earth metal, or a combination thereof, but not Sn). The element Y may be Mg, Ca, Sr, Ba, Ra, Sc, Y, Ti, Zr, hafnium (Hf), rutherfordium (Rf), V, niobium (Nb), tantalum (Ta), dubnium (Db), Cr, Mo, tungsten (W), seaborgium (Sg), technetium (Tc), rhenium (Re), bohrium (Bh), Fe, Pb, Ru, osmium (Os), hassium (Hs), rhodium (Rh), Ir, Pd, platinum (Pt), Cu, silver (Ag), gold (Au), Zn, cadmium (Cd), B, Al, Ga, Sn, In, Ti, Ge, P, As, Sb, bismuth (Bi), S, selenium (Se), tellurium (Te), polonium (Po), or a combination thereof.

As the material that may reversibly intercalate and deintercalate lithium ions, any carbon-based negative active material that is generally used in a lithium battery, such as crystalline carbon, amorphous carbon, or a combination thereof may be used. Non-limiting examples of the crystalline carbon include natural graphite, synthetic graphite, expandable graphite, graphene, fullerene soot, carbon nanotubes, carbon fibers, and the like. Non-limiting examples of the amorphous carbon include soft carbon (low-temperature calcined carbon) or hard carbon, mesophase pitch carbide, calcined coke, and the like. The carbon-based negative active material may have a spherical form, a flat form, a fiber form, a tube form, or a powder form.

The binder thoroughly binds negative active material particles together and thoroughly binds the negative active material to the negative electrode current collector. Representative examples of the binder include, but are not limited to, polyvinyl alcohol, carboxymethyl cellulose, hydroxyl propyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The binder is used to provide conductivity to an electrode, and the binder may be any conductive material that does not cause chemical changes to the battery. Examples of the binder include natural graphite, synthetic graphite, carbon black, acetylene black, Ketjen black, a carbonaceous material such as carbon fiber; a metallic material such as metal powder of copper, nickel, aluminum, or silver, and metal fiber; and a conductive polymer such as a polyphenylene derivative, or a mixture thereof.

Each of the positive and negative active materials, the conductive agent, and the binder may be mixed in a solvent to prepare an active material composition, and the active material composition is coated on a current collector to form the positive and negative electrodes 23 and 22, respectively.

A method of manufacturing the electrode is well known in the art, and thus, description of the method is omitted

herein. The solvent may be N-methyl pyrrolidone (NMP), acetone, water, or the like, but the solvent is not limited thereto.

The positive electrode 23 and the negative electrode 22 are separated by the coated separator 24, and the positive electrode 23, the negative electrode 22 are assembled as disposed opposite to each other with the coated separator 24 disposed therebetween, and a non-aqueous electrolyte may be injected between the positive electrode 23 and the negative electrode 22.

A lithium salt-containing non-aqueous electrolyte includes a non-aqueous electrolyte and lithium. A non-aqueous electrolyte solution, a solid electrolyte, or an inorganic solid electrolyte may be used as the non-aqueous electrolyte.

As the non-aqueous electrolytic solution, an aprotic organic solvent may be used, and examples of the aprotic organic solvent are N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydrofurane, 2-methyl tetrahydrofurane, dimethylsulfoxide, 1,3-dioxolane, formamide, dimethylformamide, acetonitrile, nitromethane, methyl formic acid, methyl acetic acid, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionic acid, ethyl propionic acid, etc.

Examples of the organic solid electrolyte are polyethylene derivatives, polyethylene oxide derivatives, polypropylene oxide derivatives, a phosphate ester polymer, polyagitation lysine, polyester sulfide, polyvinyl alcohol, vinylidene polyfluoride, a polymer having an ionic dissociable group, etc.

Examples of the inorganic solid electrolyte are nitrides, halides, and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, or the like.

The lithium salt may be any one of various lithium salts that are typically used in a lithium battery. As a material that may be dissolved well in the non-aqueous electrolyte, for example, one or more of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithiumchloroborate, lower aliphatic carbonic acid lithium, 4-phenyl boric acid lithium, lithium imide, etc may be used.

The lithium battery may be suitable for an application, such as an electric vehicle that requires high capacity, high power output, and high-temperature driving, in addition to existing mobile phones or portable computers. Also, the lithium battery may be combined with an existing internal-combustion engine, a fuel cell, a super capacitor, or the like for use in a hybrid vehicle, or the like. Furthermore, the lithium battery may be used in any other applications that require high power output, high voltage, and high-temperature driving.

Hereinafter, exemplary embodiments will be described in detail with reference to examples.

## Example 1

(1) Manufacturing a coated separator

A polyethylene film (CF2035, available from Toray) having a thickness of 20 μm was used as a separator substrate, and 8 wt% polyvinylidene fluoride (PVDF) based on a total weight of N-methylpyrrolidone (NMP) and PVDF and 3 wt% of tetraethylammonium hexafluorophosphate ($Et_4NPF_6$) based on a total weight of $Et_4NPF_6$ and PVDF were dispersed in NMP to prepare a coating solution, and the coating solution was coated on the polyethylene film by using a doctor blade.

(2) Manufacturing a lithium battery

Positive active material powder having a composition of $LiCoO_2$ and a carbon conductive agent (Super-P; available from Timcal Ltd.) were uniformly mixed in a weight ratio of 90:5, and a polyvinylidene fluoride (PVDF) binder solution was added thereto to prepare slurry having a weight ratio of the active material: carbon conductive agent: binder of 90:5:5. After coating the active material slurry on an aluminum foil having a thickness of 15 μm, the aluminum foil was dried and then pressed to prepare a positive electrode. Here, a mixture density of the positive electrode plate was 5.1 g/cm$^3$.

When preparing the cell, lithium metal was used as a counter electrode, the coated separator manufactured as described above was used as a separator and an electrolyte solution was injected between the positive electrode and the counter electrode to prepare a pressed 2032-type coin cell. As the electrolyte, a solution in which $LiPF_6$ was dissolved at a concentration of 1.10 M in a mixture solvent of ethylene carbonate (EC), ethyl methyl carbonate (EMC), and diethyl carbonate (DEC) (a volume ratio of 3:3:4 of EC:EMC:DEC) was used.

## Example 2

A coated separator and a lithium battery were manufactured in the same manner as manufacturing the coated separator in Example 1, except that $Et_4NPF_6$ was added in an amount of 7 wt% based on a total weight of $Et_4NPF_6$ and

PVDF.

**Example 3**

A coated separator and a lithium battery were manufactured in the same manner as manufacturing the coated separator in Example 1, except that $Et_4NPF_6$ was added in an amount of 10 wt% based on a total weight of $Et_4NPF_6$ and PVDF.

**Example 4**

A coated separator and a lithium battery were manufactured in the same manner as manufacturing the coated separator in Example 1, except that $Et_4NPF_6$ was added in an amount of 50 wt% based on a total weight of $Et_4NPF_6$ and PVDF.

**Example 5**

A coated separator and a lithium battery were manufactured in the same manner as manufacturing the coated separator in Example 1, except that $Me_4NPF_6$ was added instead of $Et_4NPF_6$.

**Comparative Example 1**

A lithium battery was manufactured in the same manner as in Example 1, except that an uncoated polyethylene film (CF2035, available from Toray) having a thickness of 20 $\mu$m was used as the separator.

**Comparative Example 2**

A lithium battery was manufactured in the same manner as in Example 1, except that $Et_4NPF_6$ was not used, and only PVDF was used to coat the polyethylene film.

**Comparative Example 3**

A lithium battery was manufactured in the same manner as in Example 1, except that $LiN(SO_2CF_3)_2$ was added instead of $Et_4NPF_6$.

**Evaluation Example 1: Confirming anti-static effects**

Quantities of electrostatic charges of the separators used in the lithium batteries prepared in Examples 1-4 and Comparative Examples 1-2 were measured, and the results thereof are shown in Table 1 below. As a device for measuring the quantity electrostatic charge, an electrostatic measuring device available from Ion System (775PVS) was used.

[Table 1]

| | Coating status of separator substrate | Quantity of electrostatic charge (kV) |
|---|---|---|
| Comparative Example 1 | Uncoated | 0.53 |
| Comparative Example 2 | Coating PVDF alone | 3.63 |
| Example 1 | PVDF + $Et_4NPF_6$ 3wt% | 0.01 |
| Example 2 | PVDF + $Et_4NPF_6$ 7wt% | 0.00 |
| Example 3 | PVDF + $Et_4NPF_6$ 10wt% | 0.02 |
| Example 4 | PVDF + $Et_4NPF_6$ 50wt% | 0.01 |

As shown in Table 1 above, the polyethylene (PE) film coated only with PVDF showed severe generation of electrostatic charges compared to the uncoated PE film. However, it may be concluded that when $Et_4NPF_6$ is added to the PVDF, the quantity of electrostatic charge drops to 0.02 kV or less. The anti-static effects depending on the amount of $Et_4NPF_6$ added were excellent even when $Et_4NPF_6$ was added up to 50 wt% based on a total weight of $Et_4NPF_6$ and PVDF.

**Evaluation Example 2: Evaluation of oxidation stability**

To evaluate whether dissolution and leaching of a mixture coating solution, which includes each additive that has an anti-static function and PVDF, after being coated on the separator substrate affects cell properties, test cells were prepared as described below and then oxidation stability was comparatively evaluated by using Linear sweep voltammetry (LSV).

First, as an electrolyte, a solution in which $LiPF_6$ was dissolved at a concentration of 1.10 M in a mixture solvent of ethylene carbonate (EC), ethyl methyl carbonate (EMC), and diethyl carbonate (DEC) (a volume ratio of 3:3:4 of EC:EMC:DEC) was prepared, and then 10 wt% of each anti-static agent of $Me_4NPF_6$, $Et_4NPF_6$, $Me_4NBF_4$, $LiN(SO_2CF_3)_2$ was added to the electrolyte, based on a total weight of each anti-static agent and the electrolyte.

To manufacture the test cells, a positive active material powder having a composition of $LiCoO_2$ and a carbon conductive agent (Super-P; available from Timcal Ltd.) were uniformly mixed in a weight ratio of 90:5, and a polyvinylidene fluoride (PVDF) binder solution was added thereto to prepare slurry having a weight ratio of the active material: carbon conductive agent: binder of 90:5:5. After coating the active material slurry on an aluminum foil having a thickness of 15 $\mu$m, the aluminum foil was dried and then pressed to prepare a positive electrode. Here, a mixture density of the positive electrode plate was 5.1 g/$cm^3$.

When preparing the test cell, lithium metal was used as a counter electrode, a PE film having a thickness of 20 $\mu$m (CF2035, available from Toray) was used as a separator, and an electrolyte solution was added between the positive electrode and the counter electrode to prepare a pressed 2032-type coin cell.

Linear sweep voltammetry (LSV) evaluation was performed by using a Solatron device, and LSV was measured by scanning at a rate of 1 mV/s in a region in a range of of 3 V to 7 V.

LSV evaluation results of each test cell are shown in FIG. 2.

Referring to FIG. 2, $LiN(SO_2CF_3)_2$ has better oxidation stability than $Me_4NPF_6$, $Et_4NPF_6$, and $Me_4NBF_4$. The most stable material against an electrochemical reaction was $Et_4NPF_6$. In FIG. 2, $Me_4NPF_6$, $Et_4NPF_6$, and $Me_4NBF_4$ show oxidation stability similar to a case in which only an electrolyte was used, and this suggests that the dissolution and leaching of the electrolyte after being coated on the separator do not greatly affect cell properties.

**Evaluation Example 3: Evaluation of battery properties**

Lifespan properties were evaluated as follows with respect to the batteries manufactured in Example 1, and Comparative Examples 1-3.

A charging and discharging experiment was performed at room temperature of 25°C. An initial formation efficiency was evaluated by charging at 0.1 C/discharging at 0.1 C and lifespan was evaluated by repeating charging at 1 C/discharging at 1 C for 200 times. Lifespan property is calculated by a capacity retention ratio defined by Equation 1 below

<Equation 1>

$$\text{Capacity retention rate [\%]} = [\text{discharge capacity in each cycle/ discharge capacity in a first cycle}] \times 100$$

Measurement results of capacity retention rates of the lithium batteries manufactured in Example 1, and Comparative Examples 1-3 are shown in FIG. 3 below.

As shown in FIG. 3, when $Et_4NPF_6$ is added to PVDF, the capacity retention rate was similar to the capacity retention rate of the uncoated separator or to the capacity retention rate of the separator in which only PVDF was coated. Also, the capacity retention rate was better when $Et_4NPF_6$ was added to PVDF than when $LiN(SO_2CF_3)_2$ was added to PVDF. This illustrates that a quaternary ammonium salt has better inhibitory effects than a typical lithium salt against a decrease in capacity retention rate that occurs as a charge and discharge cycle progresses.

As described above, according to the one or more of the above embodiments, a coated separator according to an embodiment may disperse electrostatic charges of a separator coated with polyvinylidene fluoride to ameliorate problems that occur due to the generation of electrostatic charges. The coated separator may be applied to various electrochemical devices such as a lithium battery, and a lithium battery including the coated separator may inhibit the generation of electrostatic charges and inhibit a decrease in capacity retention rate that occurs as a charge and discharge cycle progresses.

## Claims

1. A coated separator (24) comprising
a separator substrate; and
a separator coating layer that is disposed on at least one surface of the separator substrate and consists of polyvinylidene fluoride, at least one quaternary ammonium salt and, optionally, at least one binder resin,
the at least one quaternary ammonium salt is represented by Formula 1 below:

[Formula 1]

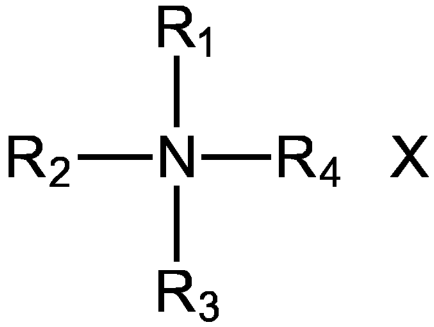

wherein $R_1$, $R_2$, $R_3$, and $R_4$ are each independently a $C_1$-$C_5$ alkyl group and X is at least one of $PF_6^-$, $BF_4^-$, $AsF_6^-$, $SbF_6^-$, $N(SO_2CF_3)_2^-$, $N(SO_2F)_2^-$, $N(SO_2CF_3)(COCF_3)^-$, $N(SO_2CF_3)(SO_2C_2F_5)^-$, $SO_3CF_3^-$, $SO_3C_2F_5^-$, $SO_3C_3F_7^-$, and $SO_3C_4F_9^-$,
the at least one binder resin being selected from polyvinylidene chloride, polybenzimidazole, polyimide, polyvinyl acetate, polyacrylonitrile, polyvinyl alcohol, carboxymethylcellulose (CMC), starch, hydroxypropyl cellulose, regenerated cellulose, polyvinylpyrrolidone, tetrafluoroethylene, polyethylene, polypropylene, polystyrene, polymethylmethacrylate, polyaniline, acrylonitrile butadiene styrene, a phenol resin, an epoxy resin, polyethylene terephthalate, polytetrafluoroethylene, polyphenylene sulfide, polyamideimide, polyetherimide, polyethylenesulfone, polyamide, polyacetal, polyphenylene oxide, polybutylene terephthalate, ethylene-propylene-diene terpolymer, sulfonated ethylene-propylene-diene terpolymer, styrene butadiene rubber, fluoride rubber, and a copolymer thereof,
wherein (i) an amount of the quaternary ammonium salt is 0.5 wt% to 50 wt% based on a total weight of the polyvinylidene fluoride and the quaternary ammonium salt, (ii) the separator coating layer includes 50 wt% or more of polyvinylidene fluoride based on a total amount of the polymer material in the separator coating layer and (iii) a thickness of the separator coating layer is 1 $\mu$m to 100 $\mu$m.

2. The coated separator of claim 1, wherein the positive ion of the at least one quaternary ammonium salt includes at least one of tetramethylammonium, tetraethylammonium, tetrapropylammonium, tetrabutylammonium, tetrapentylammonium, trimethylethylammonium, trimethylpropylammonium, trimethylbutylammonium, trimethylpentylammonium, triethylmethylammonium, triethylpropylammonium, triethylbutylammonium, triethylpentylammonium, tripropylmethylammonium, tripropylethylammonium, tripropylbutylammonium, tripropylpentylammonium, tributylmethylammonium, tributylethylammonium, tributylpropylammonium, tributylpentylammonium, dimethyldiethylammonium, dimethyldipropylammonium, dimethyldibutylammonium, dimethyldipentylammonium, diethyldipropylammonium, diethyldibutylammonium, diethyldipentylammonium, dipropyldibutylammonium, dipropyldipentylammonium, dibutyldipentylammonium, dimethylethylpropylammonium, dimethylethylbutylammonium, dimethylethylpentylammonium, dimethylpropylbutylammonium, dimethylpropylpentylammonium, dimethylbutylpentylammonium, diethylmethylpropylammonium, diethylmethylbutylammonium, diethylmethylpentylammonium, diethylpropylbutylammonium, diethylpropylpentylammonium, diethylbutylpentylammonium, dipropylmethylethylammonium, dipropylmethylbutylammonium, dipropylmethylpentylammonium, dipropylethylbutylammonium, dipropylethylpentylammonium, dipropylbutylpentylammonium, dibutylmethylethylammonium, dibutylmethylpropylammonium, dibutylmethylpentylammonium, dibutylethylpropylammonium, dibutylethylpentylammonium, dipentylmethylethylammonium, dipentylmethylpropylammonium, dipentylmethylbutylammonium, dipentylethylpropylammonium, dipentylethylbutylammonium, dipentylpropylbutylammonium, and methylethylpropylbutylammonium.

3. The coated separator of claim 2, wherein the positive ion of the at least one quaternary ammonium salt includes at least one of tetramethylammonium, tetraethylammonium, tetrapropylammonium, tetrabutylammonium, and tetrapentylammonium.

4. The coated separator of one of the preceding claims, wherein the separator substrate is a porous substrate formed of at least one polymer selected from the group consisting of polyethylene, polypropylene, polybutylene, polypentene, polytetrafluoroethylene, polyester, polyacetal, polyamide, polycarbonate, polyimide, polyetheretherketone, polyethersulfone, polyphenylene oxide, polyphenylene sulfide, polyethylenenaphthalene, and glass fiber.

5. The coated separator of claim 4, wherein the separator substrate is a porous substrate formed of polyethylene.

6. The coated separator of one of the preceding claims, wherein a thickness of the separator substrate is 1 $\mu$m to 300 $\mu$m.

7. An electrochemical device comprising the coated separator according to any of claims 1 through 6, wherein the electrochemical devise is a primary battery, secondary battery, fuel cell, solar cell, or capacitor.

8. The electrochemical device of claim 7, wherein the electrochemical device is a lithium battery (30).

9. The electrochemical device of claim 8, wherein the lithium battery (30) is a lithium secondary battery.

**Patentansprüche**

1. Beschichteter Separator (24), umfassend
ein Separatorsubstrat; und
eine Separatorbeschichtungsschicht, die auf mindestens einer Oberfläche des Separatorsubstrats angeordnet ist und aus Polyvinylidenfluorid, mindestens einem quaternären Ammoniumsalz und wahlweise mindestens einem Bindemittelharz besteht,
wobei das mindestens eine quaternäre Ammoniumsalz durch die folgende Formel 1 dargestellt wird:

[Formel 1]

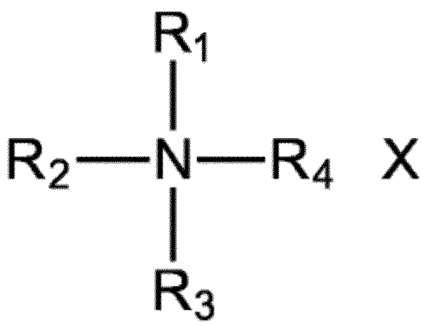

wobei $R_1$, $R_2$, $R_3$ und $R_4$ jeweils unabhängig voneinander eine $C_1$-$C_5$-Alkylgruppe sind und X mindestens eines von $PF_6^-$, $BF_4^-$, $AsF_6^-$, SB $F_6^-$, $N(SO_2CF_3)_2^-$, $N(SO_2F)_2^-$, $N(SO_2CF_3)(COCF_3)^-$, $N(SO_2CF_3)(SO_2C_2F_5)^-$, $SO_3CF_3^-$, $SO_3C_2F_5^-$, $SO_3C_3F_7^-$ und $SO_3C_4F_9^-$ ist,
wobei das mindestens eine Bindemittelharz ausgewählt ist aus Polyvinylidenchlorid, Polybenzimidazol, Polyimid, Polyvinylacetat, Polyacrylnitril, Polyvinylalkohol, Carboxymethylcellulose (CMC), Stärke, Hydroxypropylcellulose, regenerierter Cellulose, Polyvinylpyrrolidon, Tetrafluorethylen, Polyethylen, Polypropylen, Polystyrol, Polymethylmethacrylat, Polyanilin, Acrylnitrilbutadienstyrol, einem Phenolharz, einem Epoxyharz, Polyethylenterephthalat, Polytetrafluorethylen, Polyphenylensulfid, Polyamidimid, Polyetherimid, Polyethylensulfon, Polyamid, Polyacetal, Polyphenylenoxid, Polybutylenterephthalat, Ethylen-Propylen-Dien-Terpolymer, sulfoniertem Ethylen-Propylen-Dien-Terpolymer, Styrol-Butadien-Kautschuk, Fluorid-Kautschuk und einem Copolymer davon,
wobei (i) eine Menge des quaternären Ammoniumsalzes, bezogen auf das Gesamtgewicht des Polyvinylidenfluorids und des quaternären Ammoniumsalzes, 0,5 Gew.-% bis 50 Gew.-%, beträgt, (ii) die Separatorbeschichtungsschicht, bezogen auf eine Gesamtmenge des Polymermaterials in der Separatorbeschichtungsschicht, 50 Gew.-% oder mehr Polyvinylidenfluorid aufweist und (iii) eine Dicke der Separatorbeschichtungsschicht von 1 $\mu$m bis 100 $\mu$m beträgt.

2. Beschichteter Separator nach Anspruch 1, wobei das positive Ion des mindestens einen quaternären Ammoniumsalzes mindestens eines von Tetramethylammonium, Tetraethylammonium, Tetrapropylammonium, Tetrabutylammonium, Tetrapentylammonium, Trimethylethylammonium, Trimethylpropylammonium, Trimethylbutylammonium, Trimethylpentylammonium, Triethylmethylammonium, Triethylpropylammonium, Triethylbutylammonium, Triethylpentylammonium, Tripropylmethylammonium, Tripropylethylammonium, Tripropylbutylammonium, Tripropylpentylammonium, Tributylmethylammonium, Tributylethylammonium, Tributylpropylammonium, Tributylpentylammonium, Dimethyldiethylammonium, Dimethyldipropylammonium, Dimethyldibutylammonium, Dimethyldipentylammonium, Diethyldipropylammonium, Diethyldibutylammonium, Diethyldipentylammonium, Dipropyldibutylammonium, Dipropyldipentylammonium, Dibutyldipentylammonium, Dimethylethylpropylammonium, Dimethylethylbutylammonium, Dimethylethylpentylammonium, Dimethylpropylbutylammonium, Dimethylpropylpentylammonium, Dimethylbutylpentylammonium, Diethylmethylpropylammonium, Diethylmethylbutylammonium, Diethylmethylpentylammonium, Diethylpropylbutylammonium, Diethylpropylpentylammonium, Diethylbutylpentylammonium, Dipropylmethylethylammonium, Dipropylmethylbutylammonium, Dipropylmethylpentylammonium, Dipropylethylbutylammonium, Dipropylethylpentylammonium, Dipropylbutylpentylammonium, Dibutylmethylethylammonium, Dibutylmethylpropylammonium, Dibutylmethylpentylammonium, Dibutylethylpropylammonium, Dibutylethylpentylammonium, Dipentylmethylethylammonium, Dipentylmethylpropylammonium, Dipentylmethylbutylammonium, Dipentylethylpropylammonium, Dipentylethylbutylammonium, Dipentylpropylbutylammonium und Methylethylpropylbutylammonium aufweist.

**3.** Beschichteter Separator nach Anspruch 2, wobei das positive Ion des mindestens einen quaternären Ammoniumsalzes mindestens eines von Tetramethylammonium, Tetraethylammonium, Tetrapropylammonium, Tetrabutylammonium und Tetrapentylammonium aufweist.

**4.** Beschichteter Separator nach einem der vorhergehenden Ansprüche, wobei das Separatorsubstrat ein poröses Substrat ist, das ausgewählt ist aus mindestens einem Polymer, das ausgewählt ist aus der Gruppe bestehend aus Polyethylen, Polypropylen, Polybutylen, Polypenten, Polytetrafluorethylen, Polyester, Polyacetal, Polyamid, Polycarbonat, Polyimid, Polyetheretherketon, Polyethersulfon, Polyphenylenoxid, Polyphenylensulfid, Polyethylenaphthalin und Glasfaser.

**5.** Beschichteter Separator nach Anspruch 4, wobei das Separatorsubstrat ein poröses Substrat ist, das aus Polyethylen gebildet ist.

**6.** Beschichteter Separator nach einem der vorhergehenden Ansprüche, wobei eine Dicke des Separatorsubstrats 1 μm bis 300 μm beträgt.

**7.** Elektrochemische Vorrichtung, umfassend den beschichteten Separator nach einem der Ansprüche 1 bis 6, wobei die elektrochemische Vorrichtung eine Primärbatterie, Sekundärbatterie, Brennstoffzelle, Solarzelle oder ein Kondensator ist.

**8.** Elektrochemische Vorrichtung nach Anspruch 7, wobei die elektrochemische Vorrichtung eine Lithiumbatterie (30) ist.

**9.** Elektronische Vorrichtung nach Anspruch 8, wobei die Lithiumbatterie (30) eine Lithium-Sekundärbatterie ist.

## Revendications

**1.** Séparateur revêtu (24) comprenant
un substrat de séparateur ; et
une couche de revêtement de séparateur qui est disposée sur au moins une surface du substrat de séparateur et qui est constituée de poly(fluorure de vinylidène), d'au moins un sel d'ammonium quaternaire et, éventuellement, d'au moins une résine liante,
l'au moins un sel d'ammonium quaternaire étant représenté par la formule 1 ci-dessous :

[formule 1]

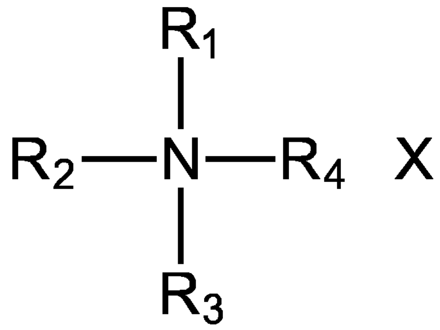

dans laquelle chacun de $R_1$, $R_2$, $R_3$ et $R_4$ est indépendamment un groupe alkyle en $C_1$ à $C_5$ et X est au moins l'un parmi $PF_6^-$, $BF_4^-$, $AsF_6^-$, $SbF_6^-$, $N(SO_2CF_3)_2^-$, $N(SO_2F)_2^-$, $N(SO_2CF_3)(COCF_3)^-$, $N(SO_2CF_3)(SO_2C_2F_5)^-$, $SO_3CF_3^-$, $SO_3C_2F_5^-$, $SO_3C_3F_7^-$, et $SO_3C_4F_9^-$,
l'au moins une résine liante étant choisie parmi le poly(chlorure de vinylidène), le polybenzimidazole, le polyimide, le poly(acétate de vinyle), le polyacrylonitrile, le poly(alcool vinylique), la carboxyméthylcellulose (CMC), l'amidon, l'hydroxypropylcellulose, la cellulose régénérée, la polyvinylpyrrolidone, le tétrafluoroéthylène, le poly-éthylène, le polypropylène, le polystyrène, le poly-(méthacrylate de méthyle), la polyaniline, l'acrylonitrile-butadiène-styrène, une résine phénolique, une résine époxy, le poly(téréphtalate d'éthylène), le polytétrafluoro-éthylène, le poly(sulfure de phénylène), le polyamide-imide, le polyéther-imide, la polyéthylène-sulfone, le polyamide, le polyacétal, le poly(oxyde de phénylène), le poly(téréphtalate de butylène), un terpolymère d'éthylène-propylène-diène, un terpolymère d'éthylène-propylène-diène sulfoné, un caoutchouc de styrène-butadiène, un caoutchouc fluoré, et un copolymère de ceux-ci,
dans lequel (i) la quantité du sel d'ammonium quaternaire est de 0,5 % en poids à 50 % en poids par rapport au poids total du poly(fluorure de vinylidène) et du sel d'ammonium quaternaire, (ii) la couche de revêtement de séparateur contient 50 % en poids ou plus de poly(fluorure de vinylidène) par rapport au poids total du matériau polymère dans la couche de revêtement de séparateur, et (iii) l'épaisseur de la couche de revêtement de séparateur est de 1 $\mu$m à 100 $\mu$m.

**2.** Séparateur revêtu selon la revendication 1, dans lequel l'ion positif de l'au moins un sel d'ammonium quaternaire comprend au moins l'un parmi le tétraméthylammonium, le tétraéthylammonium, le tétrapropylammonium, le tétrabutylammonium, le tétrapentylammonium, le triméthyléthylammonium, le triméthylpropylammonium, le triméthylbutylammonium, le triméthylpentylammonium, le triéthylméthylammonium, le triéthylpropylammonium, le triéthylbutylammonium, le triéthylpentylammonium, le tripropylméthylammonium, le tripropyléthylammonium, le tripropylbutylammonium, le tripropylpentylammonium, le tributylméthylammonium, le tributyléthylammonium, le tributylpropylammonium, le tributylpentylammonium, le diméthyldiéthylammonium, le diméthyldipropylammonium, le diméthyldibutylammonium, le diméthyldipentylammonium, le diéthyldipropylammonium, le diéthyldibutylammonium, le diéthyldipentylammonium, le dipropyldibutylammonium, le dipropyldipentylammonium, le dibutyldipentylammonium, le diméthyléthylpropylammonium, le diméthyléthylbutylammonium, le diméthyléthylpentylammonium, le diméthylpropylbutylammonium, le diméthylpropylpentylammonium, le diméthylbutylpentylammonium, le diéthylméthylpropylammonium, le diéthylméthylbutylammonium, le diéthylméthylpentylammonium, le diéthylpropylbutylammonium, le diéthylpropylpentylammonium, le diéthylbutylpentylammonium, le dipropylméthyléthylammonium, le dipropylméthylbutylammonium, le dipropylméthylpentylammonium, le dipropyléthylbutylammonium, le dipropyléthylpentylammonium, le dipropylbutylpentylammonium, le dibutylméthyléthylammonium, le dibutylméthylpropylammonium, le dibutylméthylpentylammonium, le dibutyléthylpropylammonium, le dibutyléthylpentylammonium, le dipentylméthyléthylammonium, le dipentylméthylpropylammonium, le dipentylméthylbutylammonium, le dipentyléthylpropylammonium, le dipentyléthylbutylammonium, le dipentylpropylbutylammonium, et le méthyléthylpropylbutylammonium.

**3.** Séparateur revêtu selon la revendication 2, dans lequel l'ion positif de l'au moins un sel d'ammonium quaternaire comprend au moins l'un parmi le tétraméthylammonium, le tétraéthylammonium, le tétrapropylammonium, le tétrabutylammonium, et le tétrapentylammonium.

**4.** Séparateur revêtu selon l'une des revendications précédentes, dans lequel le substrat de séparateur est un substrat poreux formé d'au moins un polymère choisi dans l'ensemble constitué par le polyéthylène, le polypropylène, le polybutylène, le polypentène, le polytétrafluoro-éthylène, le polyester, le polyacétal, le polyamide, le polycarbonate, le polyimide, la polyéther-éthercétone, la polyéther-sulfone, le poly(oxyde de phénylène), le poly(sulfure de phénylène), le polyéthylène-naphtalène, et la fibre de verre.

5. Séparateur revêtu selon la revendication 4, dans lequel le substrat de séparateur est un substrat poreux formé de polyéthylène.

6. Séparateur revêtu selon l'une des revendications précédentes, dans lequel l'épaisseur du substrat de séparateur est de 1 μm à 300 μm.

7. Dispositif électrochimique comprenant le séparateur revêtu selon l'une quelconque des revendications 1 à 6, où le dispositif électrochimique est une batterie primaire, une batterie secondaire, une pile à combustible, une pile solaire, ou un condensateur.

8. Dispositif électrochimique selon la revendication 7, où le dispositif électrochimique est une batterie au lithium (30).

9. Dispositif électrochimique selon la revendication 8, où la batterie au lithium (30) est une batterie au lithium rechargeable.

FIG. 1

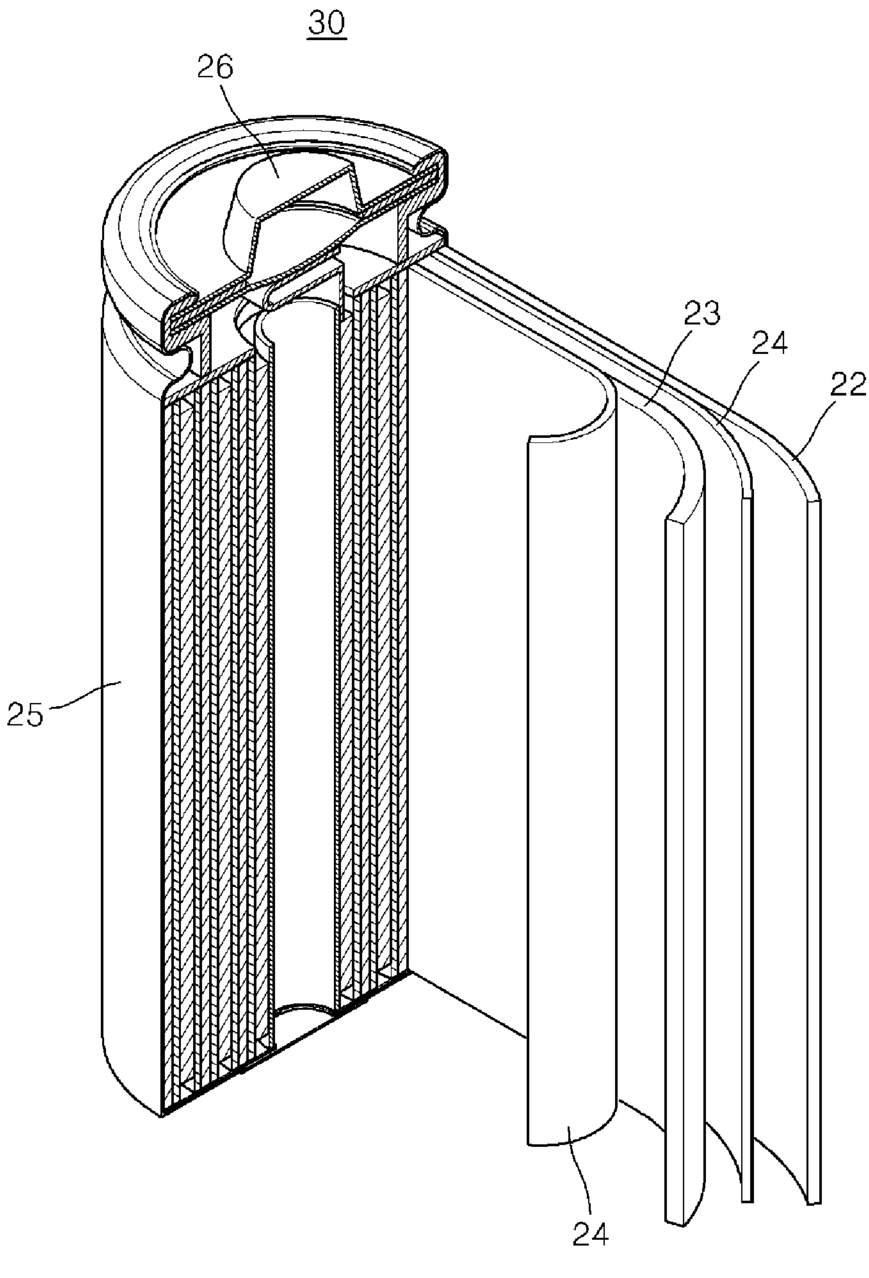

FIG. 2

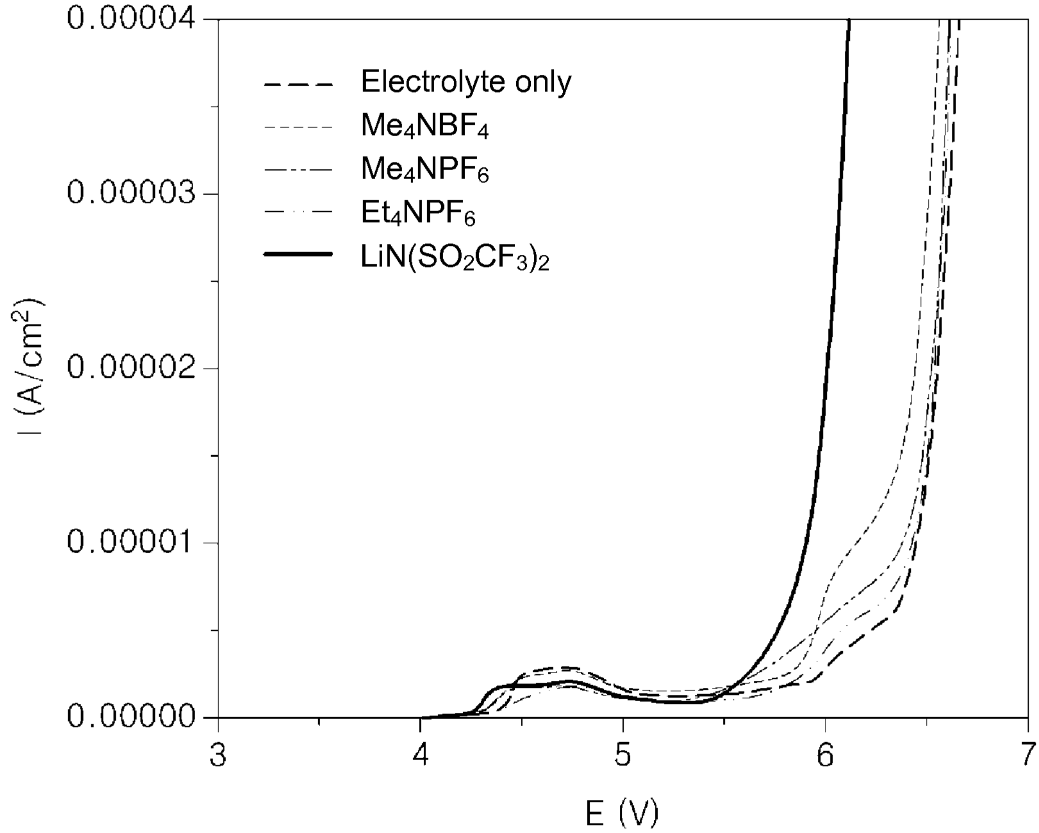
0.00004
0.00003
0.00002
0.00001
0.00000
I (A/cm2)
3
4
5
6
7
E (V)
Electrolyte only
Me4NBF4
Me4NPF6
Et4NPF6
LiN(SO2CF3)2

FIG. 3

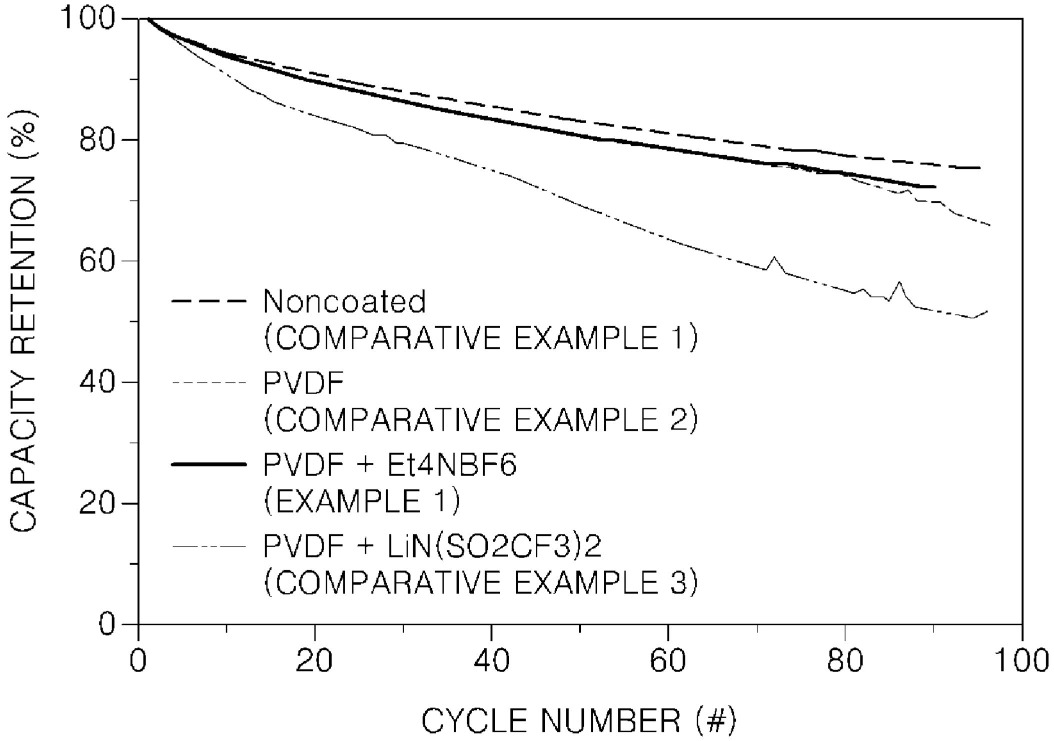

100
80
60
40
20
0
CAPACITY RETENTION (%)
0
20
40
60
80
100
CYCLE NUMBER (#)
Noncoated
(COMPARATIVE EXAMPLE 1)
PVDF
(COMPARATIVE EXAMPLE 2)
PVDF + Et4NBF6
(EXAMPLE 1)
PVDF + LiN(SO2CF3)2
(COMPARATIVE EXAMPLE 3)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2013020207 A1